# DEMANDE DE BREVET EUROPEEN

(11) **EP 1 309 058 A1**
(43) Date de publication de la demande: **07.05.2003**
(21) Numéro de dépôt: 02292660.4
(22) Date de dépôt: 25.10.2002
(51) Int. Cl.: H02G 3/06

(54) **Dispositif de liaison pour chemin de cables et ensemble de chemins de cables comportant un tel dispositif de liaison.**

(30) Priorité: 31.10.2001 FR 0114135
(71) Demandeur: Société de Constructions Electriques de la Seine ( CES), 92130 Issy-les-Moulineaux (FR)
(72) Inventeur: Penichon, Mickael, 72120 Saint-Calais (FR)
(74) Mandataire: Loisel, Bertrand

(57) **Abrégé**

Dispositif de liaison pour chemins de câbles comportant des première (1) et deuxième (2) pièces de raccordement reliées entre elles par un pivot (4) coulissant le long d'un guide courbe (3) appartenant à la première pièce de raccordement. Le guide courbe oriente le pivot (4) différemment suivant la position du pivot le long du guide. Un organe de blocage (5) sélectivement bloque les deux pièces de raccordement (1,2) dans la configuration choisie.

## Description

La présente invention est relative aux dispositifs de liaison pour chemins de câbles et aux ensembles de chemins de câbles comportant de tels dispositifs de liaison.

Plus particulièrement, l'invention concerne un dispositif de liaison pour chemins de câbles destiné à relier entre eux deux chemins de câbles.

Le document US-A-3 782 420 décrit un dispositif préfabriqué de liaison pour chemins de câbles. Un tel dispositif de liaison présente l'inconvénient de ne convenir que pour des liaisons à angle droit entre deux chemins de câbles situés dans un même plan.

La présente invention a notamment pour but de pallier cet inconvénient en proposant un dispositif de liaison qui puisse s'adapter à de multiples configurations des locaux et à de multiples dispositions des deux chemins de câbles successifs destinés à être reliés l'un à l'autre.

A cet effet, selon l'invention, un dispositif de liaison du genre en question est caractérisé en ce qu'il comporte des première et deuxième pièces de raccordement reliées entre elles par une articulation et destinées à être fixées respectivement à deux chemins de câbles, et en ce que ladite articulation comporte :
- un pivot autour duquel pivote la deuxième pièce de raccordement,
- un guide courbe appartenant à la première pièce de raccordement et le long duquel coulisse le pivot, ledit guide courbe étant adapté pour orienter le pivot différemment suivant la position dudit pivot le long du guide,
- au moins un organe de blocage pour sélectivement bloquer ladite articulation.

Grâce à ces dispositions, le dispositif de liaison selon la présente invention peut adopter différentes configurations selon les contraintes d'installation du chemin de câble. De plus son installation est rapide, sa configuration lui étant donnée in situ lors de son installation.

Dans des modes de réalisation préférés de l'invention, on peut éventuellement avoir recours en outre à l'une et/ou l'autre des dispositions suivantes :
- le guide courbe est adapté pour permettre une rotation du pivot sensiblement sur un demi-tour dans un plan contenant l'axe dudit pivot lorsque le pivot est déplacé tout le long du guide courbe ;
- le guide courbe comporte une fente qui est traversée par le pivot et qui est ménagée dans au moins une paroi courbe appartenant à la première pièce de raccordement ;
- la première pièce de raccordement comporte une plaque de tôle qui présente des première et deuxième faces et qui s'étend entre des première et deuxième extrémités, la deuxième extrémité étant courbée de façon que la première face de la plaque de tôle soit convexe au niveau de ladite deuxième extrémité, et la fente de ladite première pièce de raccordement comportant au moins une première portion ménagée dans la deuxième extrémité de la plaque de tôle ;
- la plaque de tôle comporte en outre une découpe qui délimite une languette recourbée de façon que la première face de la plaque de tôle soit convexe au niveau de ladite languette, cette languette s'étendant depuis une base contiguë à la deuxième extrémité de la plaque de tôle, vers la première extrémité de la plaque de tôle jusqu'à une extrémité libre, la fente de ladite première pièce de raccordement comportant une deuxième portion qui prolonge ladite première portion de la fente et qui est ménagée dans ladite languette ;
- la deuxième pièce de raccordement comporte une partie saillante qui est directement reliée au pivot et qui est adaptée pour pénétrer dans la découpe de la plaque de tôle lorsque le pivot se trouve dans la deuxième portion de la fente ;
- la deuxième extrémité de la pièce de tôle et la languette sont en forme de portions de cylindres à base circulaire ;
- le pivot comporte une vis qui traverse la première pièce de raccordement ainsi que ladite fente, et l'organe de blocage comprend un écrou vissé sur ladite vis et adapté pour serrer les première et deuxième pièces de raccordement l'une contre l'autre.

L'invention concerne aussi un ensemble de chemins de câbles comprenant deux chemins de câbles reliés entre eux par un dispositif de liaison tel que décrit précédemment.

Avantageusement, les deux pièces de raccordement sont fixées chacune à un chemin de câbles par au moins une liaison choisie parmi : une soudure, un clipsage, un sertissage, un vissage, un collage, un emboîtement.

D'autres caractéristiques et avantages de l'invention apparaîtront au cours de la description suivante d'une de ses formes de réalisation, donnée à titre d'exemple non limitatif, en regard des dessins joints.

Sur les dessins :
- la figure 1 est une vue en perspective éclatée d'un dispositif de liaison selon une forme de réalisation de l'invention ;
- la figure 2 est une autre vue en perspective du même dispositif de liaison, selon un autre angle de vue ;
- les figures 3 à 5 représentent des chemins de câbles reliés par des dispositifs de liaison selon la présente invention.

Sur les différentes figures, les mêmes références désignent des éléments identiques ou similaires.

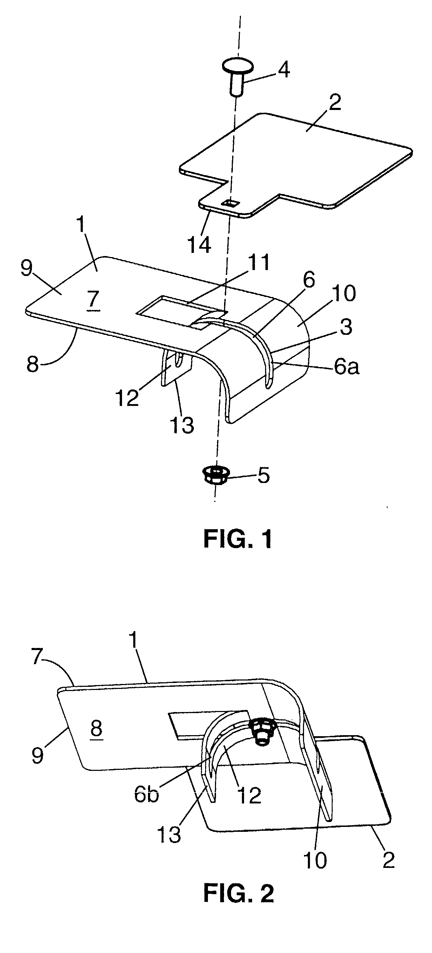

Selon les figures 1 et 2, le dispositif de liaison comprend une première pièce de raccordement 1 et une seconde pièce de raccordement 2 constituées chacune par exemple d'une plaque de tôle découpée et reliées par un pivot 4.

La première pièce de raccordement 1 présente une première face 7 et une deuxième face 8, et s'étend entre une première extrémité 9 et une deuxième extrémité 10. La deuxième extrémité 10 est courbée à 90° de façon que la première face 7 de la plaque de tôle soit convexe au niveau de ladite deuxième extrémité.

Cette première pièce de raccordement 1 comporte en outre un guide courbe 3. Ce guide courbe 3 comprend une fente 6 ayant une première portion 6a ménagée dans la deuxième extrémité 10 de cette première pièce 1.

La plaque de tôle de la première pièce de raccordement 1 comporte en outre une découpe 11 qui délimite une languette 12. Cette languette est recourbée à 90° de façon que la première face 7 soit aussi convexe au niveau de ladite languette. Cette languette 12 s'étend depuis une base contiguë à la deuxième extrémité 10 de la plaque de tôle, vers sa première extrémité 9 jusqu'à une extrémité libre 13. Avantageusement, la deuxième extrémité 10 de la pièce de tôle et la languette 12 peuvent être arrondies, notamment en forme de portions de cylindres à base circulaire.

La fente 6 de ladite première pièce de raccordement 1 comporte une deuxième portion 6b qui prolonge ladite première portion 6a de la fente, et qui est ménagée dans ladite languette 12. La deuxième extrémité 10 et la languette 12 ont de préférence des longueurs respectives telles que la fente 6 décrit sensiblement un demi cercle.

La deuxième pièce de raccordement 2 comporte une partie saillante 14 directement reliée au pivot 4. Cette partie saillante 14 est adaptée pour pénétrer dans la découpe 11 de la première pièce de raccordement 1 lorsque le pivot 4 se trouve dans la deuxième portion 6b de la fente.

Le pivot 4 comporte une vis qui traverse la première pièce de raccordement 1 au niveau de ladite fente 6. Un écrou 5 vissé sur la vis permet de serrer la première pièce de raccordement 1 et la deuxième pièce de raccordement 2 l'une contre l'autre, et ainsi de bloquer la configuration du dispositif de liaison.

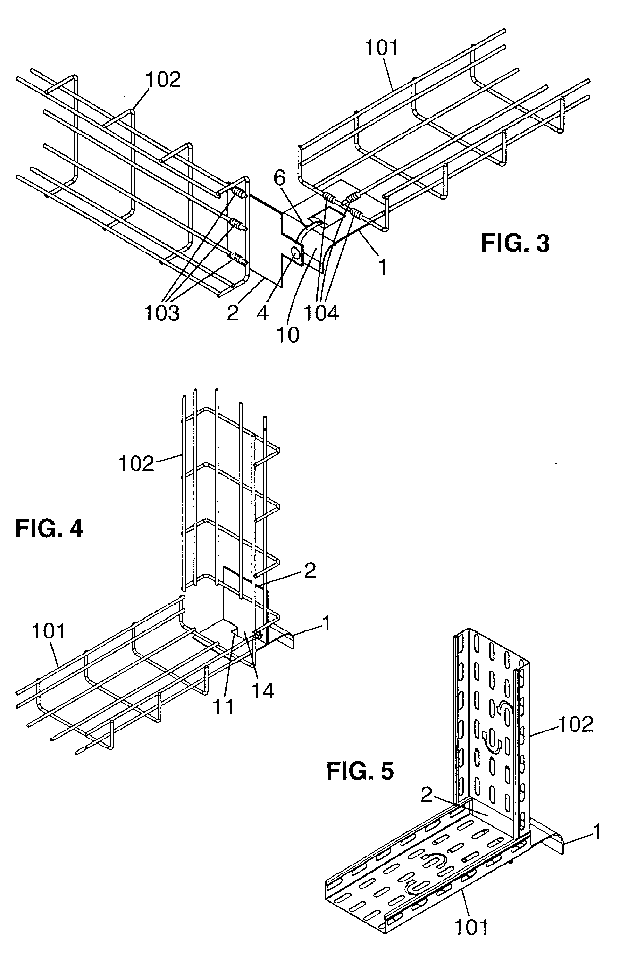

Sur les figures 3 et 4, le dispositif de liaison précédent relie deux chemins de câbles 101, 102 réalisés par exemple sous forme d'un maillage de fils métalliques maillés en forme de U. Eventuellement, les chemins de câbles 101, 102 pourraient se présenter sous la forme de goulottes de tôle ou similaire, comme représenté sur la figure 5. Chaque chemin de câble 101, 102 est fixé respectivement à l'une des pièces de raccordement 1, 2 du dispositif de liaison tel que décrit précédemment, notamment au moyen de soudures 103, 104.

En variante, les pièces de raccordement 1, 2 pourraient éventuellement être fixées aux chemins de câbles 101, 102 par au moins une liaison telle qu'un clipsage, un sertissage, un vissage, un collage ou encore un emboîtement.

Selon la position de la vis 4 dans la fente 6, les fonds des deux chemins de câbles peuvent être placés dans des plans présentant un angle quelconque entre eux, entre -90° et +90°.

Lorsque la vis 4 est dans la première partie 6a de la fente 6, le second chemin de câble 102 peut être en outre tourné par rapport au premier chemin de câble 101 autour de l'axe de la vis 4, de façon que les directions longitudinales des deux chemins de câbles ne soient pas comprises dans un même plan vertical. Cette possibilité permet d'adopter des configurations supplémentaires pour faciliter l'installation de l'ensemble de chemin de câbles. La position relative des deux chemins de câbles tels que représentés sur la figure 3 correspond à ce type de configuration du dispositif de liaison.

Dans la configuration du dispositif de liaison correspondant aux figures 4 et 5, la vis 4 se trouve dans la deuxième partie 6b de la fente 6. La partie saillante 14 de la deuxième pièce de raccordement 2 pénètre alors dans la découpe 11 de la première pièce de raccordement 1. Les largeurs respectives de la découpe 11 et de la partie saillante 14 sont avantageusement choisies pour réaliser un blocage transversal de la deuxième pièce de raccordement 2 dans la première pièce de raccordement 1, ce qui permet d'augmenter la rigidité et donc la solidité de l'ensemble de chemin de câbles ainsi reliés entre eux.

## Revendications

1. Dispositif de liaison pour chemins de câbles destiné à relier entre eux au moins deux chemins de câbles,
**caractérisé en ce qu'**il comporte des première (1) et deuxième (2) pièces de raccordement reliées entre elles par une articulation et destinées à être fixées respectivement aux deux chemins de câbles (101, 102),
et **en ce que** ladite articulation comporte :
- un pivot (4) autour duquel pivote la deuxième pièce de raccordement (2),
- un guide courbe (3) appartenant à la première pièce de raccordement et le long duquel coulisse le pivot, ledit guide courbe étant adapté pour orienter le pivot (4) différemment suivant la position dudit pivot le long du guide,
- au moins un organe de blocage (5) pour sélectivement bloquer ladite articulation.

2. Dispositif de liaison selon la revendication 1, dans lequel le guide courbe (3) est adapté pour permettre une rotation du pivot (4) sensiblement sur un demi-tour dans un plan contenant l'axe dudit pivot lorsque le pivot est déplacé tout le long du guide courbe.

3. Dispositif de liaison selon la revendication 1 ou la revendication 2, dans lequel le guide courbe comporte une fente (6) qui est traversée par le pivot (4) et qui est ménagée dans au moins une paroi courbe appartenant à la première pièce de raccordement (1).

4. Dispositif de liaison selon la revendication 3, dans lequel la première pièce de raccordement (1) comporte une plaque de tôle qui présente des première (7) et deuxième faces (8) et qui s'étend entre des première (9) et deuxième (10) extrémités, la deuxième extrémité (10) étant courbée de façon que la première face (7) de la plaque de tôle soit convexe au niveau de ladite deuxième extrémité (10), et la fente (6) de ladite première pièce de raccordement (1) comportant au moins une première portion (6a) ménagée dans la deuxième extrémité (10) de la plaque de tôle.

5. Dispositif de liaison selon la revendication 4, dans lequel la plaque de tôle comporte en outre une découpe (11) qui délimite une languette (12) recourbée de façon que la première face (7) de la plaque de tôle soit convexe au niveau de ladite languette, cette languette (12) s'étendant depuis une base contiguë à la deuxième extrémité (10) de la plaque de tôle, vers la première extrémité (9) de la plaque de tôle jusqu'à une extrémité libre (13), la fente (6) de ladite première pièce de raccordement (1) comportant une deuxième portion (6b) qui prolonge ladite première portion (6a) de la fente et qui est ménagée dans ladite languette (12).

6. Dispositif de liaison selon la revendication 5, dans lequel la deuxième pièce de raccordement comporte une partie saillante (14) qui est directement reliée au pivot (4) et qui est adaptée pour pénétrer dans la découpe (11) de la plaque de tôle lorsque le pivot se trouve dans la deuxième portion (6b) de la fente.

7. Dispositif de liaison selon la revendication 5 ou la revendication 6, dans lequel la deuxième extrémité (10) de la pièce de tôle et la languette (12) sont au moins partiellement en forme de portions de cylindres à base circulaire.

8. Dispositif de liaison selon l'une quelconque des revendications 4 à 7, dans lequel le pivot (4) comporte une vis qui traverse la première pièce de raccordement (1) ainsi que ladite fente (6), et l'organe de blocage comprend un écrou (5) vissé sur ladite vis et adapté pour serrer les première (1) et deuxième (2) pièces de raccordement l'une contre l'autre.

9. Ensemble de chemins de câbles comprenant deux chemins de câbles (101, 102) reliés entre eux par un dispositif de liaison selon l'une quelconque des revendications précédentes.

10. Ensemble de chemins de câbles selon la revendication 9, dans lequel les deux pièces de raccordement (1, 2) sont fixées chacune à un chemin de câbles (101, 102) par au moins une liaison choisie parmi : une soudure (103), un clipsage, un sertissage, un vissage, un collage, un emboîtement.
